# EUROPEAN PATENT SPECIFICATION

(11) **EP 4 482 886 B1**
(45) Date of publication and mention of the grant of the patent: **09.04.2025**
(21) Application number: 23708555.0
(22) Date of filing: 16.02.2023
(51) Int. Cl.: C08G 59/18, C08G 59/24, C08G 59/42, C08G 59/68, C09J 163/00

(54) **COLOR STABLE EPOXY COMPOSITIONS**
FARBSTABILE EPOXIDZUSAMMENSETZUNGEN
COMPOSITIONS ÉPOXYDES DE COULEUR STABLE

(30) Priority: 22.02.2022 US 202263312511 P
(43) Date of publication of application: 01.01.2025
(73) Proprietor: 3M Innovative Properties Company, Saint Paul, Minnesota 55133-3427 (US)
(72) Inventor: CHEN, Yangbin, Saint Paul, Minnesota 55133-3427 (US); LARSON, Eric G., Saint Paul, Minnesota 55133-3427 (US)
(74) Representative: Bergen, Katja
(86) International application number: PCT/IB2023/051416
(87) International publication number: WO 2023/161771

(56) References cited:
- JP-A- 2013 100 410
- US-A- 5 128 424

## Description

### Summary

Disclosed herein are curable compositions and articles prepared from the curable compositions. In some embodiments, the curable composition comprises a non-aromatic epoxy-functional epoxy resin adduct, a non-aromatic epoxy resin, and a non-aromatic anhydride-based curing agent. The epoxy resin adduct comprises the reaction product of a reaction mixture comprising a polyfunctional thiol and a polyfunctional epoxy resin. The cured composition has an Izod Impact Test (Notched Izod) test method (ASTM D256) value of at least 40 J/m and is color stable such that upon exposure to an acid bath in accordance with the Acid Bath Test Method, exhibits a ΔE 94 color change of less than 1.

Also disclosed herein are articles. In some embodiments, the articles comprise a substrate with a first major surface and a second major surface and a cured adhesive layer. The cured adhesive layer comprises the curable composition described above that has been cured. In some embodiments, the cured adhesive layer is disposed between two substrates.

### Detailed Description

Epoxy based materials are known to have high adhesion and good durability for bonding to materials such as metals, glass, ceramics, and plastics. Due to these properties, they are widely used in bonding and assembly of electronic devices. However, conventional epoxy-based materials are not color stable - they yellow and/or darken significantly when exposed to heat, UV light, or household chemicals. This instability limits their application for adhesive bonding applications that are at least partially cosmetic, for example, in a visible location on the external portion of an electronic device. Consequently, color stable epoxy-based adhesives are desirable for certain cosmetic applications.

Electronic devices (or electronic device components) may be subjected to further processing steps after an adhesive is applied to the electronic device (or electronic device component). For example, certain aluminum electronic device components can be subjected to a chemical anodization process or dye infusion process at later stages of a device build. These processes involve the use of harsh chemical treatments. Conventional epoxy-based materials darken dramatically under these conditions and therefore are not suitable for cosmetic applications. Consequently, in addition to excellent adhesion and color stability in the presence of heat, UV light, or household chemicals, for some applications, epoxy materials that are also color stable even when exposed to chemical anodization or dye infusion processes are desirable

Previous disclosures such as filed US Patent Application serial No. 62/706810, titled "Color Stable Epoxy Compositions" filed on 9/11/2020, have produced color stable epoxy adhesives. The adhesives of the current disclosure comprise curable compositions that when cured have high not only color stability but also have high impact resistance. It is difficult to achieve the balance of properties of high impact resistance, as measured by the Izod Impact Test (Notched Izod) test method (ASTM D256), while retaining the property of color stability even when exposed to harsh conditions such as chemical anodization. The currently disclosed curable compositions comprise a non-aromatic epoxy-functional epoxy resin adduct, a non-aromatic epoxy resin, and a non-aromatic anhydride-based curing agent. The epoxy resin adduct comprises the reaction product of a reaction mixture comprising a polyfunctional thiol and a polyfunctional epoxy resin.

Curable compositions comprising a non-aromatic epoxy resin and a non-aromatic anhydride-based curing agent are known for example from JP 2013 100 410 A. The term "adhesive" as used herein refers to polymeric compositions useful to adhere together two adherends. Examples of adhesives include "structural adhesives". Structural adhesives refer to adhesives that that can bond other high strength materials (e.g., wood, composites, or metal) so that the adhesive bond strength is in excess of 6.0 MPa (1000 psi).

The terms "room temperature" and "ambient temperature" are used interchangeably to mean temperatures in the range of 20°C to 25°C.

The terms "Tg" and "glass transition temperature" are used interchangeably. If measured, Tg values are determined by Differential Scanning Calorimetry (DSC) at a scan rate of 10°C/minute, unless otherwise indicated.

The term "adjacent" as used herein when referring to two layers means that the two layers are in proximity with one another with no intervening open space between them. They may be in direct contact with one another (e.g. laminated together) or there may be intervening layers.

The terms "polymer" and "macromolecule" are used herein consistent with their common usage in chemistry. Polymers and macromolecules are composed of many repeated subunits. As used herein, the term "macromolecule" is used to describe a group attached to a monomer that has multiple repeating units. The term "polymer" is used to describe the resultant material formed from a polymerization reaction.

The terms "epoxy" and "oxirane" are used interchangeably and refer to an oxirane ring which is a three membered cyclic ether. "Epoxy resin" refers to chemical compounds that contain epoxy groups.

The terms "aliphatic" and "cycloaliphatic" as used herein refer to compounds with hydrocarbon groups that are alkyl or alkylene groups.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, and ethylhexyl.

The term "alkylene" refers to a divalent group that is a radical of an alkane. The alkylene can be straight-chained, branched, cyclic, or combinations thereof. The alkylene often has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms.

The term "aromatic" as used herein refers to compounds with hydrocarbon groups that are aryl or arylene groups.

The term "non-aromatic" as used herein refers to compounds that do not include aryl or arylene groups.

The term "aryl" refers to a monovalent group that is aromatic and carbocyclic. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, anthryl, naphthyl, acenaphthyl, anthraquinonyl, phenanthryl, anthracenyl, pyrenyl, perylenyl, and fluorenyl.

The term "arylene" refers to a divalent group that is carbocyclic and aromatic. The group has one to five rings that are connected, fused, or combinations thereof. The other rings can be aromatic, non-aromatic, or combinations thereof. In some embodiments, the arylene group has up to 5 rings, up to 4 rings, up to 3 rings, up to 2 rings, or one aromatic ring. For example, the arylene group can be phenylene.

The term "heteroalkylene" refers to a divalent group that includes at least two alkylene groups connected by a thio, oxy, or -NR- where R is alkyl. The heteroalkylene can be linear, branched, cyclic, substituted with alkyl groups, or combinations thereof. Some heteroalkylenes are poloxyyalkylenes where the heteroatom is oxygen such as for example,

-CH₂CH₂(OCH₂CH₂)ₙOCH₂CH₂-.

Disclosed herein are curable compositions. In some embodiments, the curable composition comprises a non-aromatic epoxy-functional epoxy resin adduct, a non-aromatic epoxy resin, and a non-aromatic anhydride-based curing agent. The epoxy resin adduct comprises the reaction product of a reaction mixture comprising a polyfunctional thiol and a polyfunctional epoxy resin. The cured composition has a variety of desirable properties including a Izod Impact Test (Notched Izod) test method (ASTM D256) value of at least 40 J/m, and color stability.

The reaction mixture that forms the non-aromatic epoxy-functional epoxy resin adduct comprises a polyfunctional thiol and a polyfunctional epoxy resin. The thiol groups of the polyfunctional thiol react with an epoxy group on the polyfunctional epoxy resin to form a linkage of the type: -S-CH₂-CH(OH)-. In this way an epoxy-functional adduct is formed.

Typically, in the reaction mixtures, the polyfunctional epoxy resin is present in excess. This ensures that essentially all of the thiol groups are reacted. A wide range of weight ratios of epoxy to thiol are suitable. In some embodiments, the range of the weight ratio of the epoxy to the thiol are 6:4 to 9:1. Excess epoxy resin present in the adduct reaction mixture upon formation of the adduct reacts into the matrix formed when the adduct and epoxy resin are cured by the non-aromatic anhydride-based curing agent.

The reaction mixture that reacts to form the non-aromatic epoxy-functional epoxy resin adduct comprises a polyfunctional thiol. In some embodiments, the polyfunctional thiol comprises a compound of general structure 1:

G(-L-SH)ₙ Structure 1

wherein G is an n-valent atom or aliphatic compound, each L independently comprises an aliphatic linking group comprising an alkylene group, a heteroalkylene group, or a combination of alkylene and heteroalkylene groups, wherein the alkylene and heteroalkylene groups are linked by ether linkages, ester linkages, or a combination thereof, and n is an integer of 3 or greater.

In some embodiments, the group G in Structure 1 is an aliphatic group B(R¹)ₐ where B is an atom or aliphatic compound that has a valency of n+a, where a is an integer of 0 or 1, and R¹ is an alkyl group with 1-3 carbon atoms. In some embodiments, the compounds of Structure 1 have the general Structure:

B(R¹)ₐ(-CH₂-O-(D-O)ₘ-(CO)-E-SH)ₙ₋ₐ

where B, R¹ and a are described above. In these embodiments, n is an integer of 3 or greater, (CO) is a carbonyl group -C=O, D is alkylene group with 2-6 carbon atoms, m is an integer of 7-20, and E is an alkylene group with 2-6 carbon atoms.

In some embodiments, the polyfunctional thiol is a trifunctional thiol with the general structure:

C(Et)(-CH₂-O-(CH₂-CH₂-O)ₘ-(CO)-CH₂-CH₂-SH)₃

where Et is an ethyl group; and m is an integer of 7-20. Suitable compounds are commercially available from Bruno Bock of Marschacht, Germany as THIOCURE 332, THIOCURE 333, and THIOCURE 1200V or CAPCURE 3-800 from Gabriel Performance Products of Akron, OH. Particularly suitable are THIOCURE 332 and THIOCURE 333.

The reaction mixture that reacts to form the non-aromatic epoxy-functional epoxy resin adduct also comprises a polyfunctional epoxy resin. Suitable non-aromatic epoxy resins include diglycidyl ether based epoxy resins and alicyclic epoxy resins such as diepoxy acetals, diepoxy adipates, diepoxy carboxylates, and dicyclopentadiene-based epoxy resins; isocyanurate derivative epoxy resins such as triglycidyl isocyanurate; and hydrogenated epoxy resins prepared by hydrogenating the aromatic ring(s) within aromatic epoxy resins such as bisphenol A epoxy resins, bisphenol F epoxy resins, phenol novolak epoxy resins, cresol novolak epoxy resins, naphthalene epoxy resins, biphenyl epoxy resins, aralkyl epoxy resins and biphenylaralkyl epoxy resins. Two or more of these resins may also be used in combination.

In some embodiments, the polyfunctional epoxy resin is of general Structure 2:

W(-T-(-CH₂CH₂-O-))ᵣ Structure 2

wherein W is a single bond or an r valent atom or aliphatic group, each T independently comprises an aliphatic linking group comprising an alkylene group, a heteroalkylene group, or a combination of alkylene and heteroalkylene groups, wherein the alkylene and heteroalkylene groups are linked by ether linkages, ester linkages, or a combination thereof,
-(-CH₂CH₂-O-) is an oxirane ring, and r is an integer of 2 or greater.

Among the particularly suitable polyfunctional epoxy resins are difunctional epoxy resins. In these embodiments, one of the epoxy groups reacts with a thiol group and the remaining epoxy groups render the adduct epoxy functional. In some embodiments, the polyfunctional epoxy resin comprises general structure 3:

(-O-CH₂-CH₂-)-CH₂-(O-V-O-)-CH₂-(-CH₂CH₂-O-) Structure 3

where V comprises an alkylene group, a heteroalkylene group, or a combination of alkylene and heteroalkylene groups, wherein the alkylene and heteroalkylene groups are linked by ether linkages, ester linkages, or a combination thereof, and -(-CH₂CH₂-O-) is an oxirane ring. One suitable epoxy resin is the hydrogenated Bisphenol A resin JER YX8000 from Mitsubishi Chemicals of Tokyo, Japan and EPONEX 1510 from Hexion Inc of Columbus, OH.

Besides the reactants described above (the polyfunctional thiol and the polyfunctional epoxy resin) the reaction mixture may further comprise additional components. In some embodiments, the reaction mixture further comprises a catalyst. Suitable catalysts include HISHICOLIN PX-4ET (tetrbutylphosponium benzotriazolate) available from Nippon Chemical Industrial of Tokyo, Japan and CYPHOS IL 169 from Solvay of Brussels, Belgium. Particularly suitable is HISHICOLIN PX-4ET.

The level of the non-aromatic epoxy-functional epoxy resin adducts present in the curable composition can vary. In some embodiments, the curable composition comprises 15-40% by weight of the non-aromatic epoxy-functional epoxy resin adduct based upon the total weight of the curable composition.

The curable composition further comprises at least one non-aromatic epoxy resin. Suitable non-aromatic epoxy resins include those described above as components of the reaction mixture used to form the epoxy-functional adducts. The non-aromatic epoxy resin may be the same epoxy resin as was used to form the adduct or it may be different. In some embodiments, it may be desirable that the non-aromatic epoxy resin be the same as or of a similar structure as the epoxy resin used to prepare the adduct for compatibility. The amount of non-aromatic epoxy resin present in the curable composition can vary greatly. The amount of non-aromatic epoxy resin can be used to modify the properties of the cured matrix, for example, the Tg and modulus. Generally, the non-aromatic epoxy resin is present in the curable composition in an amount of from 10-30% by weight of the total curable composition.

The curable composition also comprises one or more anhydride-based curing agents. As used herein, an "anhydride-based curing agent" refers to a compound formed by dehydrating a dicarboxylic acid according to structural formula (I), where A is an aliphatic or cycloaliphatic linking group.

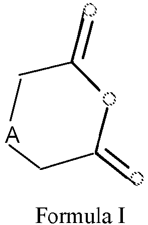

Examples of suitable anhydride-based curing agents include: linear polymeric anhydrides such as polysebacic and polyazelaic anhydride; alicyclic anhydrides such as methyltetrahydrophthalic anhydride, tetrahydro phthalic anhydride, methyl nadic anhydride, hexahydrophthalic anhydride, and methylhexahydrophthalic aiilivdride; simple alicylic anhydrides such as succinic anhydride, substituted succinic anhydride, citric acid anhydride, maleic anhydride and special adducts of maleic anhydride, dodecyl succinic anhydride, maleic anhydride, or multi-ring alicyclic anhydrides.

The amount of anhydride-based curing agent used can vary widely. Generally, the amount of anhydride-based curing agent is in the range 20-40% be weight based on the total curable composition.

The curable composition may contain additional optional additives. These optional additives can be either solids or liquids, and reactive or unreactive. Among the suitable additives are adhesion promoters, fillers, including thermally conductive fillers, flame retardants (such as ATH (aluminum trihydrate) or phosphate flame retardants), nanoparticles or functionalized nanoparticles, chain extenders, toughening agents, or combinations thereof. These components are typically solids, but some of the additive components can be liquids, and these liquid components may be suitable.

Suitable reactive additives include adhesion promoters. Examples of suitable adhesion promoters include epoxy silanes such as SILQUEST A-187 from Momentive Performance Materials, Waterford, MI.

Examples of non-reactive additives include fillers, flame retardants, nanoparticles, and toughening agents. Particularly suitable non-reactive additives are fillers such as metal oxides (silica, titania, magnesium oxide, and the like) and thermal conductivity enhancers such as boron nitride.

In some embodiments, additives for the curable compositions of the present disclosure may include one or more epoxy toughening agents. Such toughening agents may be useful, for example, for improving certain properties of the compositions so that they do not undergo brittle failure in a fracture. Examples of useful toughening agents, which may also be referred to as elastomeric modifiers, include polymeric compounds having both a rubbery phase and a thermoplastic phase such as graft copolymers having a polymerized diene rubbery core and a polyacrylate or polymethacrylate shell; graft copolymers having a rubbery core with a polyacrylate or polymethacrylate shell; elastomeric particles polymerized in situ in the epoxide from free-radical polymerizable monomers and a copolymeric stabilizer; elastomer molecules such as polyurethanes and thermoplastic elastomers; separate elastomer precursor molecules; combination molecules that include epoxy-resin segments and elastomeric segments; and, mixtures of such separate and combination molecules. The combination molecules may be prepared by reacting epoxy resin materials with elastomeric segments; the reaction leaving reactive functional groups, such as unreacted epoxy groups, on the reaction product. The use of tougheners in epoxy resins is described in the Advances in Chemistry Series No. 208 entitled "Rubbery-Modified Thermoset Resins", edited by C. K. Riew and J. K. Gillham, American Chemical Society, Washington, 1984. The amount of toughening agent to be used depends in part upon the final physical characteristics of the cured resin desired.

In some embodiments, the toughening agent in the curable compositions of the present disclosure may include graft copolymers having a polymerized diene rubbery backbone or core to which is grafted a shell of an acrylic acid ester or methacrylic acid ester, monovinyl aromatic hydrocarbon, or a mixture thereof, such as those disclosed in US Patent No. 3,496,250 (Czerwinski). Rubbery backbones can comprise polymerized butadiene or a polymerized mixture of butadiene and styrene. Shells comprising polymerized methacrylic acid esters can be lower alkyl (C₁₋₄) methacrylates. Monovinyl aromatic hydrocarbons can be styrene, alpha-methylstyrene, vinyltoluene, vinylxylene, ethylvinylbenzene, isopropylstyrene, chlorostyrene, dichlorostyrene, and ethylchlorostyrene.

Further examples of useful toughening agents are acrylate core-shell graft copolymers wherein the core or backbone is a polyacrylate polymer having a glass transition temperature (T_{g}) below about 0° C, such as poly(butyl acrylate) or poly(isooctyl acrylate) to which is grafted a polymethacrylate polymer shell having a T_{g} about 25°C such as poly(methyl methacrylate). For acrylic core/shell materials "core" will be understood to be acrylic polymer having T_{g}<0°C and "shell" will be understood to be an acrylic polymer having T_{g}>25°C. Some core/shell toughening agents (e.g., including acrylic core/shell materials and methacrylate-butadiene-styrene (MBS) copolymers wherein the core is crosslinked styrene/butadiene rubber and the shell is polymethylacrylate) are commercially available, for example, from Dow Chemical Company under the trade designation "PARALOID".

Another useful core-shell rubber is described in US Patent Publication No. 2007/0027233 (Yamaguchi et al.). Core-shell rubber particles as described in this document include a cross-linked rubber core, in most cases being a cross-linked copolymer of butadiene, and a shell which is preferably a copolymer of styrene, methyl methacrylate, glycidyl methacrylate and optionally acrylonitrile. Specific examples are KANE ACE M731, M732, M511, and M300 commercially available from Kaneka North America, Pasadena, TX.

In some embodiments, the toughening agent may include an acrylic core/shell polymer; a styrene-butadiene/methacrylate core/shell polymer; a polyether polymer; a carboxyl- or amino-terminated acrylonitrile/butadiene; a carboxylated butadiene, a polyurethane, or a combination thereof.

In some embodiments, toughening agents may be present in the curable composition in an amount between 0.1 and 10 wt. %, 0.1 and 5 wt. %, 0.5 and 5 wt. %, 1 and 5 wt. %, or 1 and 3 wt. %, based on the total weight of the curable composition.

As described above, upon curing the curable compositions have a wide range of desirable properties. In some embodiments, upon curing, the curable compositions of the present disclosure may exhibit thermal, mechanical, and rheological properties that render the compositions particularly useful as adhesives or coatings for cosmetic applications that require strong adhesion to substrates over time as well as strong adhesion to substrates upon sudden impact (i.e., strong drop performance). This performance can be modeled using the Izod Impact Test (Notched Izod) test method (ASTM D256) as described in the Examples section. The cured compositions have a Izod Impact Test (Notched Izod) test method (ASTM D256) value of at least 40 J/m.

In some embodiments, in addition to having strong adhesion, durability, and drop performance, the curable compositions of the present disclosure may exhibit color stability in the presence of heat, UV light, and household chemicals, as well as when exposed to chemical anodization or dye infusion processes. In this regard, in some embodiments, upon exposure to an acid bath in accordance with the Acid Bath Test Method set forth in the Examples of the present disclosure, the cured compositions of the present disclosure may exhibit a ΔE 94 color change of less than 1, less than 0.8, or less than 0.5.

In some embodiments, the cured compositions exhibit performance properties requisite of an adhesive suitable for use in electronic devices. In this regard, in some embodiments, the cured compositions may have an overlap shear value on an etched aluminum substrate of at least 25 MPa, at least 30 MPa, or at least 35 MPa. For purposes of the present disclosure, overlap shear values are determined in accordance with ASTM D-1002-72.

In some embodiments, the cured compositions may have a tensile elongation of at least 10% and a glass transition temperature of at least 60°C.

The curable compositions are generally cured at an elevated temperature. In some embodiments, the temperature is at least 120°C. In some embodiments, the curing time of the curable composition is less than 5 hours, less than 3 hours, or less than 1 hour at a temperature of 120°C.

In some embodiments, the curable compositions of the present disclosure may be provided (e.g., packaged) as a two-part composition, in which a first part includes the above-described non-aromatic epoxy resin and a second part includes the above described aliphatic or cycloaliphatic curing agent. The other components of the curable compositions (e.g., colorants, accelerators, fillers, dispersants, and the like), can be included in one or both of the first and second parts. The present disclosure further provides a dispenser comprising a first chamber and a second chamber. The first chamber comprises the first part, and the second chamber comprises the second part. Applying the curable composition can be carried out, for example, by dispensing the curable composition from a dispenser comprising a first chamber, a second chamber, and a mixing tip, wherein the first chamber comprises the first part, wherein the second chamber comprises the second part, and wherein the first and second chambers are coupled to the mixing tip to allow the first part and the second part to flow through the mixing tip.

Alternatively, in some embodiments, the curable compositions can be formulated as one-part formulations.

The present disclosure is further directed to methods of making the above-described curable compositions. In some embodiments, the curable compositions of the present disclosure may be prepared by, first, mixing the components of the first part (non-aromatic epoxy resin, including any additives) and, separately, mixing the components of the second part (aliphatic or cycloaliphatic curing agent, including any additives). The components of both the first and second parts may be mixed using any conventional mixing technique, including by use of a speed mixer. Next, the first and second parts may be mixed together using any conventional mixing technique to form the curable composition.

Also disclosed herein are articles prepared from the curable compositions described above. In some embodiments, the articles comprise a substrate with a first major surface and a second major surface; and a cured adhesive layer, where the adhesive layer comprises a curable composition that has been cured. The curable compositions are described in detail above and comprise a non-aromatic epoxy-functional epoxy resin adduct, a non-aromatic epoxy resin, and a non-aromatic anhydride-based curing agent. The epoxy resin adduct comprises the reaction product of a reaction mixture comprising a polyfunctional thiol and a polyfunctional epoxy resin.

The articles can be prepared in a variety of ways. In some embodiments, the curable compositions may be coated onto a substrate and permitted to cure. The coatings can be coated on a wide range of substrates. Examples of suitable substrates include metal substrates, ceramic substrates, glass substrates, or polymeric substrates. The substrates can be in a variety of shapes such as plates or tubes and may have smooth or irregular surfaces and may be hollow or solid.

The curable composition can be applied to a substrate to form a curable layer using a variety of techniques, including dip coating, forward and reverse roll coating, wire wound rod coating, and die coating. Die coaters include knife coaters, slot coaters, slide coaters, fluid bearing coaters, slide curtain coaters, and drop die curtain coaters. Upon coating, the curable composition is permitted to cure to form a cured coating.

The thickness of the coating varies depending upon the desired use for the coating. In some embodiments, the coatings may range from 25 micrometers (1 mil) to 1 millimeter in thickness. The curable compositions may be coated onto substrates at useful thicknesses ranging from 5 micrometers to 10,000 micrometers, 25 micrometers to 10,000 micrometers, 100 micrometers to 5000 micrometers, or 250 micrometers to 1000 micrometers.

In some embodiments, the curable composition may function as a structural adhesive, i.e. the curable composition is capable of bonding a first substrate to a second substrate, after curing. In some embodiments, the present disclosure provides an article comprising a first substrate, a second substrate, and a cured composition disposed between and adhering the first substrate to the second substrate, wherein the cured composition is the reaction product of the curable composition according to any one of the curable compositions of the present disclosure. In some embodiments, the first and/or second substrate may be at least one of a metal, a ceramic, a glass, and a polymer.

Useful substrates can be of any nature and composition and can be inorganic or organic. Representative examples of useful substrates include ceramics, siliceous substrates including glass, metal (e.g., aluminum or steel), natural and man-made stone, woven and nonwoven articles, polymeric materials, including thermoplastic and thermosets, (such as polymethyl (meth)acrylate, polycarbonate, polystyrene, styrene copolymers, such as styrene acrylonitrile copolymers, polyesters, polyethylene terephthalate), silicones, paints (such as those based on acrylic resins), powder coatings (such as polyurethane or hybrid powder coatings), and wood; and composites of the foregoing materials.

In some embodiments, the curable compositions of the present disclosure may be used as a cosmetic inlay for an electronic device or component of an electronic device. Generally, a cosmetic inlay refers to a component that is positioned within a gap or hole in another material, and that is positioned, sized, and shaped such that it fills (or substantially fills) the gap or hole and is flush (or substantially flush) with the material adjacent the component/inlay. In some embodiments, the curable compositions may be used a cosmetic inlay for the casing or housing or an electronic device (mobile phone, tablet, or laptop). The casing or housing may be formed of metal (e.g, aluminum). Particularly suitable substrates include aluminum, stainless steel, and titanium.

### Examples

Unless otherwise noted, all parts, percentages, ratios, etc. in the Examples and the rest of the specification are by weight. The following abbreviations are used: cm = centimeters; mm = millimeters; g = grams; lb = pounds; Pa = Pascals; kN = kiloNewtons; min = minutes; J/m = Joules/meter.

**Table 1: Materials**

| Abbreviation | Description | Source |
|---|---|---|
| Epoxy-1 | Phenol, 4,4'-(1-methylethylidene)bis-, polymer with 2-(chloromethyl)oxirane, hydrogenated obtained under the trade designation JER YX8000 | Mitsubishi Chemicals, Tokyo Japan |
| Thiol-1 | Ethoxylated trime-thylolpropane, ester with 3-mercaptopropionic acid, obtained under the trade designation THIOCURE 332 | Bruno Bock Chemische Fabrik GmbH & Co. Marschacht, Germany. |
| Thiol-2 | Ethoxylated trime-thylolpropane tri(3-mercaptopropionate), obtained under the trade designation THIOCURE 333 | Bruno Bock Chemische Fabrik GmbH & Co. |
| Cat-1 | Catalyst-1, Tetrabutylphosphonium o,o-diethylphosphorodithioate, obtained under the trade designation HISHICOLIN PX-4ET | Nippon Chemical Industrial Co., LTD, Tokyo, Japan |
| Tough-1 | Toughener-1, Methyl methacrylate, Butadiene, Styrene Acrylic Copolymer, obtained under the trade designation KANE ACE M-731 | Kaneka North America LLC, Pasadena, TX, United States |
| Anhyd-1 | Anhydride-1, Methylhexahydrophthalic Anhydride, obtained under the trade designation LINDRIDE 52-D | Lindau Chemicals, Inc., Columbia, SC, United States |
| DDSA | Dodecenylsuccinic anhydride | Dixie Chemical Company, Inc., Pasadena, TX, United States |
| Amine-1 | Lauryl dimethylamine, obtained under the trade designation FARMIN DM2098 | Kao Specialties Americas LLC, High Point, NC, United States |
| Add-1 | Additive-1, adhesion promoter GammaGlycidoxypropyltrimethoxysilane, obtained under the trade designation SILQUEST A-187 | Momentive Performance Materials Inc., Waterford, MI, United States |
| silica | Pyrogenic silica, obtained under the trade designation HDK H21 | Wacker Chemie AG, Munich, Germany |
| TiO₂ | Titanium dioxide pigment, obtained under the trade designation KRONOS 2160 | Kronos Worldwide, Inc., Dallas, Texas, United States |

### Test Methods and Preparation and General Procedures

### Color Change Test Method

The color change of the plaques was measured as follows. Initial color was measured for each plaque using a Konica CM3700A spectrophotometer (available from Konica Minolta Sensing Americas, Inc. Ramsey, New Jersey), in reflectance specular component included (SCI) mode with a 10-degree observer angle. After a plaque was exposed to the Anodization Bath Simulation Process, the color was measured again. The difference in color before and after the acid bath exposure was calculated using the ΔE 94 calculation as designated by the International Commission on Illumination (CIE) with an 1:C ratio of 2:1 under the illuminants F02 (cool white fluorescent). A ΔE 94 color change of less than 1 is generally regarded as undetectable to the human eye.

### Preparation of Acid Baths to Simulate Anodization Process

Suitable anodization processes for electronic devices made with aluminum are described in US Patent Publication No. 2013/0270120 A1. The process steps having the greatest impact on adhesive color are de-smut and chemical polish. A de-smut bath was made using 30% nitric acid. A chemical polish bath was made by mixing 129 g of concentrated sulfuric acid (98%) with 441 g of 85% phosphoric acid.

### Anodization Bath Simulation Process

The Example and Comparative Example plaques were individually immersed in the de-smut bath for 30 seconds at 25°C; this was immediately followed by a 30 second rinse in deionized water. Next, the plaques were immersed for 60 seconds in the chemical polish bath which had been pre-heated to 80°C. This was followed by rinsing in deionized water for 60 seconds. The plaques were then allowed to dry at ambient conditions before final color measurement. The color change data after the anodization simulation process are presented in Tables 5-7.

### Overlap Shear (OLS) Test

Sample adhesive composition was applied directly onto an untreated 2.5 cm x 10 cm x 0.3 cm (1 inch x 4 inch x 0.125 inch) test panel and an untreated second test panel was immediately placed against the sample adhesive composition on the first test panel so that the overlapped area was 1.3 cm x 2.5 cm (0.5 inch x 1 inch). A clamp was applied to the overlapped area. The test panels were aluminum. A small amount of sample adhesive composition squeezed out of the overlapped area and was allowed to remain. The bonds were allowed to cure for 1 hour at 120°C. The clamps were then removed, and the overlap bonds were tested in shear (OLS) on a tensile tester at a crosshead speed of 0.25 cm/minute (0.1 inch/minute). The overlap shear values were recorded in pounds per square inch and were converted into megaPascals (MPa). Overlap shear values represent the average value of three replicates.

### Tensile Modulus Test

Tensile Modulus was measured in accordance with ASTM D638-14 on three sample adhesive compositions taken from molded Type IV dogbones with a thickness of about 3.0 mm.

### Elongation at Break Test

Elongation at break percentage values were measured in accordance with ASTM D638-14 with a pulling rate of 5 mm/minute.

### Notched Izod Impact Test

Notched Izod Impact values were measured in accordance with ASTM D256-10.

### Examples:

### Preparation of Adducts

Epoxies and thiols were weighed into DAC SPEEDMIXER cups, in weight percentages represented in Table 2. The epoxy and thiol were then mixed using a DAC SPEEDMIXER at approximately 2000 revolutions per minute (RPM) for two minutes. Cat-1 was then added at to the epoxy-thiol mixture and mixed at approximately 2000 RPM for two minutes. The obtained mixture in DAC SPEEDMIXER cups were placed into heating oven with temperature set at 55°C - 70°C for 15 min, and then taken out for mixing by DAC SPEEDMIXER at approximately 2000 RPM for two minutes, and placed back in heating oven with temperature set at 55°C - 70°C for another 15 min. The obtained adducts were in a form of viscos liquid.

**Table 2: Epoxy-Thiol Adduct Compositions (wt.%)**

| Adduct | Epoxy-1 | Thiol-1 | Thiol-2 | Cat-1 |
|---|---|---|---|---|
| A1 | 68.6 | 29.4 | 0 | 2 |
| A2 | 58.8 | 0 | 39.2 | 2 |

### Examples 1 and 2 (EX1 and EX2) and Comparative Example 1 (CE1)

Materials, as shown in Table 3, for each Example (EX) and the Comparative Example (CE) were combined and then mixed under vacuum using a DAC SPEEDMIXER, forming a curable composition. Each composition was then cast between a release coated polyester film to give a plaque that was two mm in thickness. The plaques were cured for two hours at 120°C in an oven.

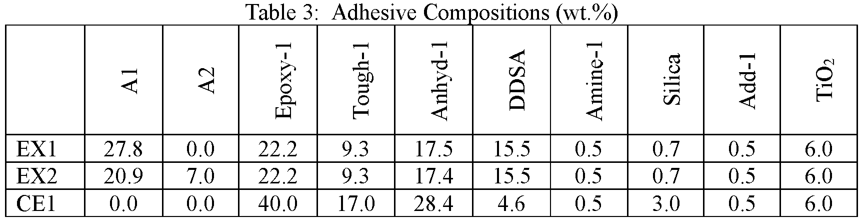

Mechanical properties sample adhesive compositions underwent OLS, Tensile Modulus, Elongation at Break, and Notched Izod Impact testing and the results are represented in Table 4. An MTS frame with a 5 kN load cell and tensile and three point bending grips were used for tensile, respectively. In tensile testing mode, the test procedure described in ASTM D-638-14 standard was followed, however no strain gauge was used, and instead, grip separation distance was used to determine the sample elongation. An Instron CEAST 9050 impact tester and its specimen notcher were used to measure room temperature Notched Izod impact strength.

**Table 4: Mechanical Properties of Adhesive Compositions**

| Property | Unit | EX1 | EX2 | CE1 |
|---|---|---|---|---|
| OLS | MPa | 29.8 | 34.1 | 20.9 |
| Tensile Modulus | MPa | 992 | 871 | 1750 |
| Elongation at Break | % | 23 | 37.8 | 4.7 |
| Notched Izod Impact | J/m | 48 | 46 | 26 |

Color change of the cured sample adhesive composition was measured after anodization treatment. The anodization treatment was done by submerging cured sample into nitric acid at 23°C for one minute, and then followed by submerging into 80°C phosphoric acid for one minute. The cured sample adhesive composition was gently rinsed by distilled water after the anodization treatment. Color measurements were taken on the same sample before and after the anodization treatment. Results are represented in Table 5 forEX1, Table 6 for EX2, and Table 7 for CE1.

**Table 5. Color Measurement Results for EX1**

| EX1 | L* | a* | b* | C* | h° | ΔE94 |
|---|---|---|---|---|---|---|
| Before Anodization | 96.85 | 0.51 | 2.81 | 2.86 | 79.65 | - |
| After Anodization | 96.89 | 0.51 | 2.89 | 2.94 | 79.93 | 0.07 |

**Table 6. Color Measurement Results for EX2**

| EX2 | L* | a* | b* | C* | h° | ΔE94 |
|---|---|---|---|---|---|---|
| Before Anodization | 97.86 | 0.53 | 3 | 3.05 | 79.92 | - |
| After Anodization | 97.86 | 0.5 | 3.09 | 3.13 | 80.87 | 0.09 |

**Table 7. Color Measurement Results for CE1**

| CE1 | L* | a* | b* | C* | h° | ΔE94 |
|---|---|---|---|---|---|---|
| Before Anodization | 96.81 | -0.22 | 3.21 | 3.22 | 93.95 | - |
| After Anodization | 96.84 | -0.24 | 3.32 | 3.32 | 94.2 | 0.1 |

## Claims

1. A curable composition comprising:
a non-aromatic epoxy-functional epoxy resin adduct, the epoxy resin adduct
comprising the reaction product of a reaction mixture comprising:
a polyfunctional thiol; and
a polyfunctional epoxy resin;
a non-aromatic epoxy resin; and
a non-aromatic anhydride-based curing agent;
wherein the cured composition has a Izod Impact Test (Notched Izod) test method (ASTM D256) value of at least 40 J/m.

2. The curable composition of claim 1, wherein the polyfunctional thiol comprises a compound of general structure 1:
G(-L-SH)ₙ Structure 1
wherein G is an n-valent atom or aliphatic compound;
each L independently comprises an aliphatic linking group comprising an alkylene group, a heteroalkylene group, or a combination of alkylene and heteroalkylene groups, wherein the alkylene and heteroalkylene groups are linked by ether linkages, ester linkages, or a combination thereof; and
n is an integer of 3 or greater.

3. The curable composition of claim 2, wherein Structure 1 comprises:
B(R¹)ₐ(-CH₂-O-(D-O)ₘ-(CO)-E-SH)ₙ₋ₐ
Wherein B has a valency of n+a and comprises an atom or aliphatic compound;
R¹ is an alkyl group with 1-3 carbon atoms;
a is an integer of 0 or 1;
n is an integer of 3 or greater;
(CO) is a carbonyl group -C=O;
D is alkylene group with 2-6 carbon atoms;
m is an integer of 7-20; and
E is an alkylene group with 2-6 carbon atoms.

4. The curable composition of claim 2, wherein Structure 1 comprises:
C(Et)(-CH₂-O-(CH₂-CH₂-O)ₘ-(CO)-CH₂-CH₂-SH)₃
Wherein Et is an ethyl group; and
m is an integer of 7-20.

5. The curable composition of claim 1, wherein the polyfunctional epoxy resin is of general Structure 2:
W(-T-(-CH₂CH₂-O-))ᵣ Structure 2
wherein W is a single bond or an r valent atom or aliphatic group;
each T independently comprises an aliphatic linking group comprising an alkylene group, a heteroalkylene group, or a combination of alkylene and heteroalkylene groups, wherein the alkylene and heteroalkylene groups are linked by ether linkages, ester linkages, or a combination thereof;
-(-CH₂CH₂-O-) is an oxirane ring; and
r is an integer of 2 or greater.

6. The curable composition of claim 1, wherein the polyfunctional epoxy resin comprises general structure 3:
(-O-CH₂-CH₂-)-CH₂-(O-V-O-)-CH₂-(-CH₂CH₂-O-) Structure 3
wherein V comprises an alkylene group, a heteroalkylene group, or a combination of alkylene and heteroalkylene groups, wherein the alkylene and heteroalkylene groups are linked by ether linkages, ester linkages, or a combination thereof; and
-(-CH₂CH₂-O-) is an oxirane ring.

7. The curable composition of claim 1, wherein the reaction mixture further comprises a catalyst selected from a tertiary amine, a quaternary ammonium salt, a metal carboxylate, a trialkylphosphine, a tetraalkylphosphonium salt, or a combination thereof.

8. The curable composition of claim 1, wherein the non-aromatic epoxy-functional epoxy resin adduct comprises 15-40% by weight of the curable composition.

9. The curable composition of claim 1, wherein the curable composition, when cured, upon exposure to an acid bath in accordance with the Acid Bath Test Method, exhibits a ΔE 94 color change of less than 1.

10. An article comprising:
a substrate with a first major surface and a second major surface; and
a cured adhesive layer, wherein the adhesive layer is disposed on the second major surface of the substrate and comprises a curable composition that has been cured, wherein the curable composition comprises:
a non-aromatic epoxy-functional epoxy resin adduct, the epoxy resin adduct
comprising the reaction product of a reaction mixture comprising:
a polyfunctional thiol; and
a polyfunctional epoxy resin;
a non-aromatic epoxy resin; and
a non-aromatic anhydride-based curing agent;
wherein the cured composition has a Izod Impact Test (Notched Izod) test method (ASTM D256) value of at least 40 J/m.

11. The article of claim 10, wherein the substrate is metal, ceramic, glass, or polymer.

12. The article of claim 10, further comprising a second substrate with a first major surface and a second major surface, wherein the cured adhesive layer is disposed on the first major surface of the second substrate.

13. The article of claim 10, wherein the polyfunctional thiol comprises a compound of general structure 1:
G(-L-SH)ₙ Structure 1
wherein G is an n-valent atom or aliphatic compound;
each L independently comprises an aliphatic linking group comprising an alkylene group, a heteroalkylene group, or a combination of alkylene and heteroalkylene groups, wherein the alkylene and heteroalkylene groups are linked by ether linkages, ester linkages, or a combination thereof; and
n is an integer of 3 or greater.

14. The article of claim 10, wherein the polyfunctional epoxy resin comprises general structure 3:
(-O-CH₂-CH₂-)-CH₂-(O-V-O-)-CH₂-(-CH₂CH₂-O-) Structure 3
wherein V comprises an alkylene group, a heteroalkylene group, or a combination of alkylene and heteroalkylene groups, wherein the alkylene and heteroalkylene groups are linked by ether linkages, ester linkages, or a combination thereof; and
-(-CH₂CH₂-O-) is an oxirane ring.

15. The article of claim 10, wherein the non-aromatic epoxy-functional epoxy resin adduct comprises 15-40% by weight of the curable composition.

## Patentansprüche

1. Eine härtbare Zusammensetzung, umfassend:
ein nichtaromatisches epoxidfunktionelles Epoxidharzaddukt, das Epoxidharzaddukt umfassend das Reaktionsprodukt einer Reaktionsmischung, umfassend:
ein polyfunktionelles Thiol; und
ein polyfunktionelles Epoxidharz;
ein nichtaromatisches Epoxidharz; und
ein nichtaromatisches Anhydrid-basiertes Härtungsmittel;
wobei die gehärtete Zusammensetzung einen Wert eines Prüfverfahrens (ASTM D256) einer Izod-Schlagprüfung (Kerbschlagzähigkeit) von mindestens 40 J/m aufweist.

2. Die härtbare Zusammensetzung nach Anspruch 1, wobei das polyfunktionelle Thiol eine Verbindung der allgemeinen Struktur 1 umfasst:
G(-L-SH)ₙ Struktur 1
wobei G ein n-wertiges Atom oder eine aliphatische Verbindung ist;
jedes L unabhängig eine aliphatische Verknüpfungsgruppe umfasst, umfassend eine Alkylengruppe, eine Heteroalkylengruppe oder eine Kombination aus Alkylen- und Heteroalkylengruppen, wobei die Alkylen- und Heteroalkylengruppen durch Etherverknüpfungen, Esterverknüpfungen oder eine Kombination davon verknüpft sind; und
n eine ganze Zahl von 3 oder mehr ist.

3. Die härtbare Zusammensetzung nach Anspruch 2, wobei Struktur 1 umfasst:
B(R¹)a(-CH₂-O-(D-O)ₘ-(CO)-E-SH)ₙ₋ₐ
wobei B eine Valenz von n+a aufweist und ein Atom oder eine aliphatische Verbindung umfasst;
R¹ eine Alkylgruppe mit 1-3 Kohlenstoffatomen ist;
a eine ganze Zahl von 0 oder 1 ist;
n eine ganze Zahl von 3 oder mehr ist;
(CO) eine Carbonylgruppe -C=O ist;
D eine Alkylengruppe mit 2-6 Kohlenstoffatomen ist;
m eine ganze Zahl von 7-20 ist; und
E eine Alkylengruppe mit 2-6 Kohlenstoffatomen ist.

4. Die härtbare Zusammensetzung nach Anspruch 2, wobei Struktur 1 umfasst:
C(Et)(-CH₂-O-(CH₂-CH₂-O)ₘ-(CO)-CH₂-CH₂-SH)₃
Wobei Et eine Ethylgruppe ist; und
m eine ganze Zahl von 7-20 ist.

5. Die härtbare Zusammensetzung nach Anspruch 1, wobei das polyfunktionelle Epoxidharz von der allgemeinen Struktur 2 ist:
W(-T-(-CH₂CH₂-O-))ᵣ Struktur 2
wobei W eine Einfachbindung oder ein r-wertiges Atom oder eine aliphatische Gruppe ist;
jedes T unabhängig eine aliphatische Verknüpfungsgruppe umfasst, umfassend eine Alkylengruppe, eine Heteroalkylengruppe oder eine Kombination aus Alkylen- und Heteroalkylengruppen, wobei die Alkylen- und Heteroalkylengruppen durch Etherverknüpfungen, Esterverknüpfungen oder eine Kombination davon verknüpft sind;
-(-CH₂CH₂-O-) ein Oxiranring ist; und
r eine ganze Zahl von 2 oder mehr ist.

6. Die härtbare Zusammensetzung nach Anspruch 1, wobei das polyfunktionelle Epoxidharz die allgemeine Struktur 3 umfasst:
(-O-CH₂-CH₂-)-CH₂-(O-V-O-)-CH₂-(-CH₂CH₂-O-) Struktur 3
wobei V eine Alkylengruppe, eine Heteroalkylengruppe oder eine Kombination aus Alkylen- und Heteroalkylengruppen umfasst, wobei die Alkylen- und Heteroalkylengruppen durch Etherverknüpfungen, Esterverknüpfungen oder eine Kombination davon verknüpft sind; und
-(-CH₂CH₂-O-) ein Oxiranring ist.

7. Die härtbare Zusammensetzung nach Anspruch 1, wobei die Reaktionsmischung ferner einen Katalysator umfasst, der aus einem tertiären Amin, einem quartären Ammoniumsalz, einem Metallcarboxylat, einem Trialkylphosphin, einem Tetraalkylphosphoniumsalz oder einer Kombination davon ausgewählt ist.

8. Die härtbare Zusammensetzung nach Anspruch 1, wobei das nichtaromatische epoxidfunktionelle Epoxidharzaddukt zu 15-40 Gew.-% die härtbare Zusammensetzung umfasst.

9. Die härtbare Zusammensetzung nach Anspruch 1, wobei die härtbare Zusammensetzung, wenn gehärtet, bei einem Aussetzen gegenüber einem Säurebad gemäß dem Säurebadprüfverfahren eine ΔE 94-Farbänderung von weniger als 1 vorweist.

10. Ein Gegenstand, umfassend:
ein erstes Substrat mit einer ersten Hauptoberfläche und einer zweiten Hauptoberfläche; und
eine ausgehärtete Klebeschicht, wobei die Klebeschicht auf der zweiten Hauptoberfläche des Substrats angeordnet ist und eine härtbare Zusammensetzung umfasst, die ausgehärtet wurde, wobei die härtbare Zusammensetzung umfasst:
ein nichtaromatisches epoxidfunktionelles Epoxidharzaddukt, das Epoxidharzaddukt umfassend das Reaktionsprodukt einer Reaktionsmischung, umfassend:
ein polyfunktionelles Thiol; und
ein polyfunktionelles Epoxidharz;
ein nichtaromatisches Epoxidharz; und
ein nichtaromatisches Anhydrid-basiertes Härtungsmittel;
wobei die gehärtete Zusammensetzung einen Wert eines Prüfverfahrens (ASTM D256) einer Izod-Schlagprüfung (Kerbschlagzähigkeit) von mindestens 40 J/m aufweist.

11. Der Gegenstand nach Anspruch 10, wobei das Substrat Metall, Keramik, Glas oder Polymer ist.

12. Der Gegenstand nach Anspruch 10, ferner umfassend ein zweites Substrat mit einer ersten Hauptoberfläche und einer zweiten Hauptoberfläche, wobei die ausgehärtete Klebstoffschicht auf der ersten Hauptoberfläche des zweiten Substrats angeordnet ist.

13. Der Gegenstand nach Anspruch 10, wobei das polyfunktionelle Thiol eine Verbindung der allgemeinen Struktur 1 umfasst:
G(-L-SH)ₙ Struktur 1
wobei G ein n-wertiges Atom oder eine aliphatische Verbindung ist;
jedes L unabhängig eine aliphatische Verknüpfungsgruppe umfasst, umfassend eine Alkylengruppe, eine Heteroalkylengruppe oder eine Kombination aus Alkylen- und Heteroalkylengruppen, wobei die Alkylen- und Heteroalkylengruppen durch Etherverknüpfungen, Esterverknüpfungen oder eine Kombination davon verknüpft sind; und
n eine ganze Zahl von 3 oder mehr ist.

14. Der Gegenstand nach Anspruch 10, wobei das polyfunktionelle Epoxidharz die allgemeine Struktur 3 umfasst:
(-O-CH₂-CH₂-)-CH₂-(O-V-O-)-CH₂-(-CH₂CH₂-O-) Struktur 3
wobei V eine Alkylengruppe, eine Heteroalkylengruppe oder eine Kombination aus Alkylen- und Heteroalkylengruppen umfasst, wobei die Alkylen- und Heteroalkylengruppen durch Etherverknüpfungen, Esterverknüpfungen oder eine Kombination davon verknüpft sind; und
-(-CH₂CH₂-O-) ein Oxiranring ist.

15. Der Gegenstand nach Anspruch 10, wobei das nichtaromatische epoxidfunktionelle Epoxidharzaddukt zu 15-40 Gew.-% die härtbare Zusammensetzung umfasst.

## Revendications

1. Composition durcissable comprenant :
un adduit de résine époxy à fonctionnalité époxy non aromatique, l'adduit de résine époxy comprenant le produit de réaction d'un mélange réactionnel comprenant :
un thiol polyfonctionnel ; et
une résine époxy polyfonctionnelle ;
une résine époxy non aromatique ; et
un agent de durcissement à base d'anhydride non aromatique ;
dans laquelle la composition durcie a une valeur d'au moins 40 J/m lors de l'essai de choc Izod (Izod entaillé) méthode d'essai (ASTM D256).

2. Composition durcissable selon la revendication 1, dans laquelle le thiol polyfonctionnel comprend un composé de structure générale 1 :
G(-L-SH)ₙ Structure 1
dans laquelle G est un atome de valence n ou un composé aliphatique ;
chaque L comprend indépendamment un groupe de liaison aliphatique comprenant un groupe alkylène, un groupe hétéroalkylène, ou une combinaison de groupes alkylène et hétéroalkylène, dans laquelle les groupes alkylène et hétéroalkylène sont liés par des liaisons éther, des liaisons ester, ou une combinaison de celles-ci ; et
n est un nombre entier valant 3 ou plus.

3. Composition durcissable selon la revendication 2, dans laquelle la Structure 1 comprend :
B(R¹)ₐ(-CH₂-O-(D-O)ₘ-(CO)-E-SH)ₙ₋ₐ
dans laquelle B a une valence de n+a et comprend un atome ou un composé aliphatique ;
R¹ est un groupe alkyle ayant 1 à 3 atomes de carbone ;
a est un nombre entier valant 0 ou 1 ;
n est un nombre entier valant 3 ou plus ;
(CO) est un groupe carbonyle -C=O ;
D est un groupe alkylène ayant 2 à 6 atomes de carbone ;
m est un nombre entier valant de 7 à 20 ; et
E est un groupe alkylène ayant 2 à 6 atomes de carbone.

4. Composition durcissable selon la revendication 2, dans laquelle la Structure 1 comprend :
C(Et)(-CH₂-O-(CH₂-CH₂-O)ₘ-(CO)-CH₂-CH₂-SH)₃
dans laquelle Et est un groupe éthyle ; et
m est un nombre entier valant de 7 à 20.

5. Composition durcissable selon la revendication 1, dans laquelle la résine époxy polyfonctionnelle est de Structure générale 2 :
W(-T-(-CH₂CH₂-O-))ᵣ Structure 2
dans laquelle W est une liaison simple ou un atome de valence r ou un groupe aliphatique ;
chaque T comprend indépendamment un groupe de liaison aliphatique comprenant un groupe alkylène, un groupe hétéroalkylène, ou une combinaison de groupes alkylène et hétéroalkylène, dans laquelle les groupes alkylène et hétéroalkylène sont liés par des liaisons éther, des liaisons ester, ou une combinaison de celles-ci ;
-(-CH₂CH₂-O-) est un cycle oxirane ; et
r est un nombre entier valant 2 ou plus.

6. Composition durcissable selon la revendication 1, dans laquelle la résine époxy polyfonctionnelle comprend la structure générale 3 :
(-O-CH₂-CH₂-)-CH₂-(O-V-O-)-CH₂-(-CH₂CH₂-O-) Structure 3
dans laquelle V comprend un groupe alkylène, un groupe hétéroalkylène, ou une combinaison de groupes alkylène et hétéroalkylène, dans laquelle les groupes alkylène et hétéroalkylène sont liés par des liaisons éther, des liaisons ester, ou une combinaison de celles-ci ; et
-(-CH₂CH₂-O-) est un cycle oxirane.

7. Composition durcissable selon la revendication 1, dans laquelle le mélange réactionnel comprend en outre un catalyseur choisi parmi une amine tertiaire, un sel d'ammonium quaternaire, un carboxylate métallique, une trialkylphosphine, un sel de tétraalkylphosphonium, ou une combinaison de ceux-ci.

8. Composition durcissable selon la revendication 1, dans laquelle l'adduit de résine époxy à fonctionnalité époxy non aromatique représente de 15 à 40 % en poids de la composition durcissable.

9. Composition durcissable selon la revendication 1, dans laquelle la composition durcissable, une fois durcie, lorsqu'elle est exposée à un bain d'acide conformément à la méthode d'essai au bain d'acide, présente un changement de couleur ΔE 94 inférieur à 1.

10. Article comprenant :
un substrat avec une première surface principale et une seconde surface principale ; et
une couche adhésive durcie, dans lequel la couche adhésive est disposée sur la seconde surface principale du substrat et comprend une composition durcissable qui a été durcie, dans laquelle la composition durcissable comprend :
un adduit de résine époxy à fonctionnalité époxy non aromatique, l'adduit de résine époxy comprenant le produit de réaction d'un mélange réactionnel comprenant :
un thiol polyfonctionnel ; et
une résine époxy polyfonctionnelle ;
une résine époxy non aromatique ; et
un agent de durcissement à base d'anhydride non aromatique ;
dans lequel la composition durcie a une valeur d'au moins 40 J/m lors de l'essai de choc Izod (Izod entaillé) méthode d'essai (ASTM D256).

11. Procédé selon la revendication 10, dans lequel le substrat est du métal, de la céramique, du verre, ou un polymère.

12. Article selon la revendication 10, comprenant en outre un second substrat avec une première surface principale et une seconde surface principale, dans lequel la couche adhésive durcie est disposée sur la première surface principale du second substrat.

13. Article selon la revendication 10, dans lequel le thiol polyfonctionnel comprend un composé de structure générale 1 :
G(-L-SH)ₙ Structure 1
dans laquelle G est un atome de valence n ou un composé aliphatique ;
chaque L comprend indépendamment un groupe de liaison aliphatique comprenant un groupe alkylène, un groupe hétéroalkylène, ou une combinaison de groupes alkylène et hétéroalkylène, dans laquelle les groupes alkylène et hétéroalkylène sont liés par des liaisons éther, des liaisons ester, ou une combinaison de celles-ci ; et
n est un nombre entier valant 3 ou plus.

14. Article selon la revendication 10, dans lequel la résine époxy polyfonctionnelle comprend la structure générale 3 :
(-O-CH₂-CH₂-)-CH₂-(O-V-O-)-CH₂-(-CH₂CH₂-O-) Structure 3
dans laquelle V comprend un groupe alkylène, un groupe hétéroalkylène, ou une combinaison de groupes alkylène et hétéroalkylène, dans laquelle les groupes alkylène et hétéroalkylène sont liés par des liaisons éther, des liaisons ester, ou une combinaison de celles-ci ; et
-(-CH₂CH₂-O-) est un cycle oxirane.

15. Article selon la revendication 10, dans lequel l'adduit de résine époxy à fonctionnalité époxy non aromatique représente de 15 à 40 % en poids de la composition durcissable.
